# EUROPEAN PATENT APPLICATION

(11) **EP 4 741 686 A1**
(43) Date of publication of application: **13.05.2026**
(21) Application number: 24383224.3
(22) Date of filing: 11.11.2024
(51) Int. Cl.: F16H 63/18, F16H 63/32

(54) **DESMODROMIC SHIFT FOR MOTORCYCLES**

(71) Applicant: XIU RDI, S.L.U., 17243 LLAMBILLES Girona (ES)
(72) Inventor: SERRA ROQUETA, Josep, 17243 LLAMBILLES (Girona) (ES)
(74) Representative: Herrero & Asociados, S.L.

(57) **Abstract**

The desmodromic shift for motorcycles comprises a drum (1) comprising a plurality of slots (2), each slot (2) defining a bottom (3) and side walls (4); a plurality of shift forks (5), each shift fork (5) comprising a stud (6), that is housed inside one of the slots (2), wherein each stud (6) has a frustoconical shape, and the side walls (4) of each slot (2) define an obtuse angle with respect to the bottom (3) of the slot (2).

It permits to provide a desmodromic shift for motorcycles in which the contact between the stud and the slot is along a line, and not only at one point, as with the currently know desmodromic shifts.

## Description

The present invention relates to a desmodromic shift for motorcycles.

### Background of the invention

Gear shifting arrangements called desmodromic are currently used in motorcycles, comprising a cylindrical drum.

The drum comprises a plurality of slots for activating different gears at different angular positions. The slots extend in the circumferential direction of the drum and are mutually spaced in an axial direction of the drum.

One shift element, or stud, is guided in each slot. The stud is arranged for translational movement along the slot and is connected to a shift fork. The movement of the stud moves the shift fork for engaging different gear wheels.

Examples of these desmodromic shifts are disclosed in documents US2008229873 A1 and US 8,402,859 B2, for example.

Usually, the slots have a rectangular profile in cross-section, i.e. the bottom defines a right angle with respect to the side walls, and the studs have a cylindrical shape, corresponding to the internal profile of the slots.

These drums with such slots with rectangular profile have the disadvantage that the stud only contacts one point of the slot due to the difference in speed of rotation of the outer diameter of the drum and the bottom of the slot.

### Description of the invention

Therefore, an objective of the present invention is to provide a desmodromic shift for motorcycles in which the contact between the stud and the slot is along a line, and not only at one point, as with the currently know desmodromic shifts.

The desmodromic shift for motorcycles according to the present invention solves the above-mentioned disadvantages and has other advantages which will be described below.

The desmodromic shift for motorcycles according to the present invention is described in claim 1, and the dependent claims include additional features that are optional.

In particular, the desmodromic shift for motorcycles comprises:
- a drum comprising a plurality of slots, each slot defining a bottom and side walls;
- a plurality of shift forks, each shift fork comprising a stud, that is housed inside one of the slots,
wherein each stud has a frustoconical shape, and the side walls of each slot define an obtuse angle with respect to the bottom of the slot.

According to a possible embodiment, each stud can be rotatable along its central axis.

In this case, each shift fork preferably comprises a protrusion on which each stud is rotatably engaged.

Furthermore, the slots have preferably a sinuous profile.

According to a preferred embodiment, the drum and/or the shift fork can be made from aluminum.

With the desmodromic shift according to the present invention, the force exerted between the stud and the slot is distributed over a contact line instead of just an edge.

Furthermore, with the embodiment in which the stud is rotatable, the friction is reduced, mainly when changing speed.

This makes it possible to produce, for example, the desmodromic shift with lighter materials. For example, it can be produced in aluminum with surface treatment instead of hardened steel, as it is commonly used in the conventional desmodromic shifts.

### Brief description of the drawings

For a better understanding of what has been explained above, some drawings are included in which, schematically and only by way of a non-limiting example, a practical case of embodiment is represented.

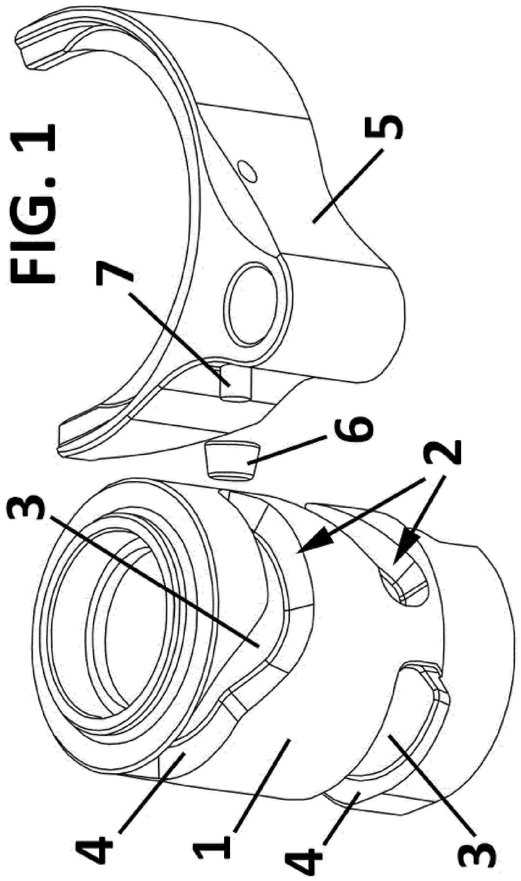

Figure 1 is a perspective view of the desmodromic shift for motorcycles according to the present invention.

### Description of a preferred embodiment

Figure 1 shows the desmodromic shift for motorcycles according to the present invention, comprising a drum (1) and a plurality of shift forks (5), of which only one shift fork is shown in Figure 1 for simplicity reasons.

Both the drum (1) and the shift forks (5) are preferably made of aluminum, e.g. aluminum with a surface treatment.

The drum (1) comprises a plurality of slots (2), which preferably have a sinuous profile. In the drawing the number of slots (2) is two, but the drum (1) can have any convenient number of slots (2).

Each slot (2) defines a bottom (3) and two side walls (4), that according to the present invention, defines an obtuse angle between the bottom (3) and each of the side walls (4), defining also an internal profile of the slot (2).

Furthermore, each shift fork (5) comprises a stud (6) that is housed inside one of the slots (2). These studs (6) have a frustoconical shape, as shown in Figure 1, in correspondence with the internal profile of the slot (2) defined by the bottom (3) and the side walls (4).

According to a possible embodiment, the stud (6) can be rotatable along its central axis. To this end, the stud (6) is rotatably engaged with a protrusion (7) provided in the shift fork (5).

Thanks to the configuration of the slots (2) and the studs (6), the force exerted between each stud (6) and each slot (2) is distributed over a contact line instead of just an edge.

The operation of the desmodromic shift according to the present invention is the same as any conventional desmodromic shift for motorcycles, except for the feature that the force exerted between each stud (6) and each slot (2) is distributed over a contact line instead of just an edge, as stated previously.

Although reference has been made to a specific embodiment of the invention, it is obvious to a person skilled in the art that the desmodromic shift for motorcycles described is susceptible to numerous variations and modifications, and that all the details mentioned can be replaced by technically equivalent ones, without departing from the scope of protection defined by the appended claims.

## Claims

1. Desmodromic shift for motorcycles, comprising:
- a drum (1) comprising a plurality of slots (2), each slot (2) defining a bottom (3) and side walls (4);
- a plurality of shift forks (5), each shift fork (5) comprising a stud (6), that is housed inside one of the slots (2),
**characterized in that** each stud (6) has a frustoconical shape, and the side walls (4) of each slot (2) define an obtuse angle with respect to the bottom (3) of the slot (2).

2. Desmodromic shift for motorcycles according to claim 1, wherein each stud (6) is rotatable along its central axis.

3. Desmodromic shift for motorcycles according to claim 2, wherein each shift fork (5) comprises a protrusion (7) on which each stud (6) is rotatably engaged.

4. Desmodromic shift for motorcycles according to claim 1, wherein the slots (2) have a sinuous profile.

5. Desmodromic shift for motorcycles according to any one of the previous claims, wherein the drum (1) and/or the shift fork (5) is made from aluminum.
